# FASCICULE DE BREVET EUROPEEN

(11) **EP 3 386 798 B1**
(45) Date de publication et mention de la délivrance du brevet: **14.08.2019**
(21) Numéro de dépôt: 16815889.7
(22) Date de dépôt: 28.11.2016
(51) Int. Cl.: B60Q 1/26, B60Q 1/22, B60Q 1/30

(54) **PAIRE DE BLOCS OPTIQUES ARRIÈRE DE SIGNALISATION POUR VÉHICULE AUTOMOBILE**
EIN PAAR OPTISCHE RÜCKSIGNALISIERUNGSBLÖCKE FÜR EIN KRAFTFAHRZEUG
PAIR OF REAR SIGNALLING OPTICAL BLOCKS FOR A MOTOR VEHICLE

(30) Priorité: 11.12.2015 FR 1562163
(43) Date de publication de la demande: 17.10.2018
(73) Titulaire: PSA AUTOMOBILES S.A., 78300 Poissy (FR)
(72) Inventeur: CARROUGET, Alain, 28700 Levainville (FR); SIMANDRE, Stephane, 28130 Chartainvilliers (FR)
(86) Numéro de dépôt international: PCT/FR2016/053115
(87) Numéro de publication internationale: WO 2017/098108

(56) Documents cités:
- WO-A1-90/06246
- CN-A- 104 154 478
- DE-A1- 19 852 310
- FR-A1- 2 811 276
- FR-A1- 2 928 616
- US-B1- 6 273 594

## Description

### Domaine de l'invention

La présente invention concerne d'une manière générale le domaine des blocs optiques de signalisation pour véhicules automobiles. Elle se rapporte plus particulièrement aux blocs optiques arrière de signalisation d'un tel véhicule automobile.

### Arrière-plan de l'invention

Le document FR 2 928 616 A1 décrit une paire de blocs optiques arrières de signalisation pour véhicule, l'un des blocs étant équipé d'un feu de recul alors que l'autre est équipé d'un feu anti-brouillard.

Les blocs optiques arrière de signalisation pour véhicules automobiles comportent généralement un boîtier renfermant une pluralité de feux doté d'au moins une source lumineuse associée à un réflecteur de rayons lumineux.

Un tel bloc optique arrière de signalisation comprend classiquement un feu de stop, un feu clignotant de changement de direction ainsi qu'un feu de brouillard ou bien un feu de recul suivant le côté du véhicule sur lequel ce bloc optique est implanté (les blocs optiques arrière situés du côté conducteur étant dotés du feu de brouillard tandis que ceux situés du côté passager avant sont munis du feu de recul).

L'agencement des feux d'un même bloc optique d'éclairage est contraint par certaines réglementations édictées dans le domaine de l'éclairage automobile.

Ainsi, les normes européennes ECE imposent de prévoir une distance minimale de 100 mm entre le feu stop et le feu de brouillard.

De manière à respecter cette exigence concernant les blocs optiques arrière destinés à être implantés du côté conducteur, la demande de brevet EP 1 164 053 divulgue un tel bloc optique dont le feu stop comprend deux zones lumineuses distinctes.

La première zone lumineuse de ce feu stop est séparée du feu de brouillard d'une distance conforme à la réglementation en matière d'éclairage automobile, tandis que sa seconde zone lumineuse est située dans une position arbitraire en regard de la zone lumineuse du feu de brouillard.

Ces deux zones lumineuses du feu stop sont en outre activables indépendamment l'une de l'autre de sorte que ces dernières soient illuminées ensemble lorsque le feu de brouillard est éteint, et que seule la première zone soit illuminée lorsque ce feu de brouillard est illuminé.

Cependant, du fait que seule cette première zone du feu stop soit illuminée dans certaines circonstances, cette dernière doit être suffisamment large pour satisfaire d'elle-même au seuil minimum de luminosité imposée par la réglementation concernant ce type de feu.

La largeur d'un tel feu stop pris dans son ensemble est donc très nettement supérieure à celle d'un feu stop classique de sorte que les blocs optiques mettant en oeuvre cette solution présente l'inconvénient d'être particulièrement volumineux.

Un autre agencement connu pour respecter la distance réglementaire entre le feu stop et le feu de brouillard, consiste à interposer entre ces derniers un feu clignotant de changement de direction présentant une largeur d'au moins 100 mm.

Afin que le bloc optique arrière correspondant ne soit pas trop large, le feu de brouillard est alors nettement plus étroit que le feu clignotant (entre 40 et 60 mm) ce qui demeure néanmoins suffisant d'un point de vue fonctionnel.

De sorte à respecter une certaine symétrie de style, la largeur du feu de recul implanté sur le bloc optique arrière situé côté passager en lieu et place du feu de brouillard est identique à celle de ce dernier.

A l'usage, cette faible largeur ne permet pas au feu de recul de produire une luminosité suffisante pour assurer au conducteur une vision satisfaisante de l'environnement arrière du véhicule par l'intermédiaire des rétroviseurs ou de la caméra de recul.

### Objet et résumé de l'invention

La présente invention vise donc à améliorer l'assistance lumineuse procurée par le feu de recul tout en respectant la réglementation et en préservant une certaine compacité ainsi qu'un aspect symétrique des deux blocs optiques arrière de signalisation.

Elle propose à cet effet une paire de blocs optiques arrière de signalisation pour véhicule automobile comportant un premier bloc optique et un second bloc optique de mêmes dimensions et destinés à être implantés symétriquement par rapport à l'axe longitudinal dudit véhicule, respectivement du côté conducteur et du côté passager, lesdits blocs optiques comprenant chacun un boîtier dont la bordure périphérique supporte une glace de couverture,
le boîtier dudit premier bloc optique renfermant un feu stop, un feu de brouillard espacé dudit feu stop d'une distance de préférence au moins égale au seuil minimum requis par la réglementation, ainsi qu'un feu clignotant de changement de direction interposé entre ces deux feux,
le boîtier dudit second bloc optique renfermant un feu stop, un feu de recul, ainsi qu'un feu clignotant de changement de direction interposé entre ces deux feux ;
caractérisé en ce que les feux clignotant et de brouillard dudit premier bloc optique sont séparés par une zone de style non illuminée, et en ce que le feu de recul dudit second bloc optique présente une largeur correspondant à celles additionnées dudit feu de brouillard et de ladite zone de style dudit premier bloc optique.

L'agencement interne de la paire de blocs optiques arrière de signalisation selon l'invention permet ainsi d'optimiser la largeur du feu de recul de sorte à assurer au conducteur une vision satisfaisante de l'environnement arrière du véhicule par l'intermédiaire des rétroviseurs ou de la caméra de recul, tout en respectant les contraintes réglementaires et en préservant une symétrie visuelle entre les deux blocs optiques.

Selon des caractéristiques préférées de l'invention, prises seules ou en combinaison :
- ladite zone de style dudit premier bloc optique présente une largeur comprise entre 20 et 70 mm ;
- la portion de la glace de couverture dudit premier bloc optique située en regard dudit feu de brouillard et de ladite zone de style présente une couleur identique à celle de la portion symétrique de la glace de couverture dudit second bloc optique située en regard dudit feu de recul ;

- les feux stop et clignotant de chacun desdits blocs optiques sont accolés l'un à l'autre ;
- lesdits feux stop et clignotant dudit second bloc optique sont symétriquement identiques auxdits feux stop et clignotant dudit premier bloc optique ;
- chacun desdits feux desdits blocs optiques comporte un réflecteur et au moins une source lumineuse montée à l'arrière de ce réflecteur ;
- la partie latérale interne du réflecteur du feu clignotant dudit premier bloc optique est reliée à la portion latérale externe du réflecteur dudit feu de brouillard par une paroi dont la surface externe non réfléchissante porte des stries ou un grainage ;
- les réflecteurs desdits feux de chacun desdits blocs optiques sont réalisés d'une seule pièce par moulage à partir d'un matériau thermoplastique, leur face extérieure orientée en direction de ladite glace de couverture correspondante étant recouverte d'un revêtement réfléchissant ; et/ou
- chacun desdits blocs optiques comporte également un feu de position surplombant les autres dits feux.

L'invention vise également sous un second aspect un véhicule automobile caractérisé en ce qu'il comporte une telle paire de blocs optiques arrière de signalisation.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 est une vue de face d'une paire de blocs optiques arrière de signalisation conforme à l'invention ;
- la figure 2 est une vue en perspective des deux blocs optiques de la figure 1 sur laquelle la partie supérieure de ces derniers a été arrachée ; et
- la figure 3 est une vue en coupe longitudinale des deux blocs optiques de la figure 1.

### Description détaillée d'un mode préféré de réalisation

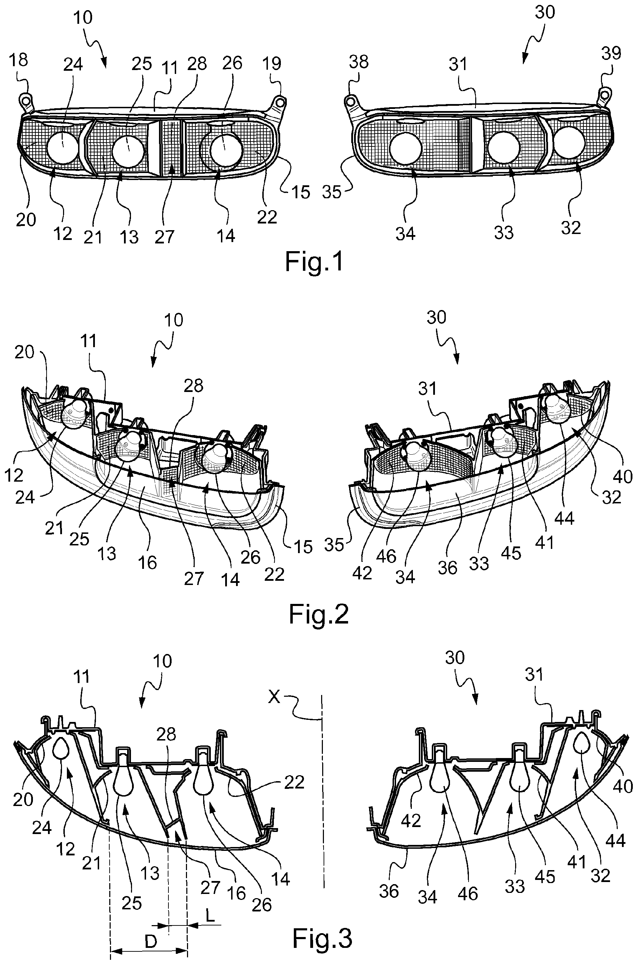

La paire de blocs optiques arrière de signalisation représentée sur les figures 1 à 3 comporte deux blocs optiques 10, 30 de mêmes dimensions destinés à être implantés symétriquement par rapport à l'axe longitudinal X d'un véhicule, respectivement du côté conducteur et du côté passager.

Dans la suite de la description, les termes « externe » et « interne » seront utilisés pour définir la position relative d'un élément par référence à l'axe longitudinal X du véhicule. L'élément le plus proche de cet axe X sera ainsi qualifié d'interne par opposition à l'autre élément plus éloigné de ce même axe qui sera quant à lui qualifié d'externe.

Le premier bloc optique 10 comporte de manière classique un boîtier 11 renfermant un feu stop 12, un feu clignotant de changement de direction 13 ainsi qu'un feu de brouillard 14, et dont la bordure périphérique 15 supporte une glace de couverture 16 réalisée dans un matériau thermoplastique transparent partiellement teinté tel que le polyméthacrylate de méthyle (PMMA).

Le boîtier 11, venu de moulage d'une seule pièce à partir d'un polymère thermoplastique tel que l'acrylonitrile butadiène styrène (ABS), comporte des éléments d'ancrage permettant le montage de ce bloc optique 10 sur la structure de caisse du véhicule. En l'espèce, ce boîtier 11 comprend deux éléments d'ancrage supérieurs 18, 19 disposés à ses deux extrémités latérales, ainsi qu'un élément d'ancrage inférieur, non visible sur les figures, disposé dans sa partie basse et centré latéralement.

Les éléments d'ancrage latéraux supérieurs 18, 19 sont ici constitués chacun par une patte plane venue de moulage avec le boîtier 11 et munie d'un perçage destiné à recevoir une vis pour assurer leur fixation respectivement sur la partie arrière supérieure du boîtier d'un bloc optique d'éclairage renfermant des feux d'éclairage (feux de route, de croisement et de position).

Chaque feu 12, 13, 14 comporte un réflecteur parabolique 20, 21, 22 et une source lumineuse 24, 25, 26 constituée ici par une ampoule à incandescence mono filament de type P21W teintée ou non et montée à l'arrière de ce réflecteur 20, 21, 22 sur la paroi de fond du boîtier 11 par l'intermédiaire d'une douille.

Les trois réflecteurs 20, 21, 22 sont avantageusement réalisés d'une seule pièce par moulage à partir d'un matériau thermoplastique tel que le polyméthacrylate de méthyle (PMMA). Leur face extérieure orientée en direction de la glace de couverture 16 est recouverte d'un revêtement réfléchissant.

Comme illustré sur la figure 3, le feu stop 12 et le feu de brouillard 14 sont espacés d'une distance D au moins égale au seuil de 100 mm requis par la réglementation entre ces deux feux.

Cette distance D, correspondant à l'écartement entre leurs deux réflecteurs 20, 22, sera avantageusement égale à ce seuil minimal afin d'optimiser la largeur du bloc optique 10.

Le feu clignotant de changement de direction 13 est quant à lui interposé entre le feu stop 12 et celui de brouillard 14.

Plus précisément, ce feu clignotant 13 est accolé au feu stop 12 (l'extrémité de la partie latérale externe du réflecteur 21 se confondant avec celle de la partie latérale interne du réflecteur 20), tandis qu'il est séparé du feu de brouillard par une zone de style non illuminée 27 dont la largeur L est définie par l'écartement entre le bord latéral externe du réflecteur 21 et le bord latéral interne du feu réflecteur 22.

La partie latérale interne du réflecteur 21 du feu clignotant 13 est en outre reliée à la partie latérale externe du réflecteur 20 du feu de brouillard 14 par une paroi 28 sensiblement transversale à l'axe optique du bloc 10 dont la surface externe non réfléchissante porte avantageusement des stries ou un grainage la rendant plus opaque de sorte à masquer le fond du boîtier 11 dans la zone de style 27 tout en assurant une certaine continuité visuelle avec le feu de brouillard 14 depuis l'extérieur du bloc optique 10.

Le second bloc optique 30 comporte de manière classique un boîtier 31 renfermant un feu stop 32, un feu clignotant de changement de direction 33 ainsi qu'un feu de recul 34, et dont la bordure périphérique 35 supporte une glace de couverture 36 similaire à la glace 16.

Tout comme le boîtier 11, le boîtier 31 comporte deux éléments d'ancrage supérieurs 38, 39 semblables aux éléments d'ancrage 18, 19 et agencés de manière identique, ainsi qu'un élément d'ancrage inférieur non visible sur les figures disposé dans sa partie basse et centré latéralement.

Chaque feu 32, 33, 34 comporte un réflecteur parabolique 40, 41, 42 et au moins une source lumineuse 44, 45, 46 constituée ici par une ampoule à incandescence mono filament de type P21W teintée ou non et montée à l'arrière de ce réflecteur 40, 41, 42 sur la paroi de fond du boîtier 31 par l'intermédiaire d'une douille.

Les trois réflecteurs 40, 41, 42 sont également avantageusement réalisés d'une seule pièce par moulage à partir d'un matériau thermoplastique tel que le polyméthacrylate de méthyle (PMMA), avec leur face extérieure orientée en direction de la glace de couverture 36 qui est recouverte d'un revêtement réfléchissant.

Comme on peut le constater sur les figures, les feux stop 32 et clignotant de changement de direction 33 sont symétriquement identiques aux feux stop 12 et clignotant 13 du premier bloc optique 10, le feu clignotant 33 étant en outre interposé entre le feu stop 32 et celui de recul 34 mais selon un agencement différent de celui du premier bloc optique 10.

Plus précisément, ce feu clignotant 33 est accolé non seulement au feu stop 32 (l'extrémité de la partie latérale externe du réflecteur 41 se confondant avec celle de la partie latérale interne du réflecteur 40) mais également au feu de recul 34 du fait de l'absence d'une zone de style telle que 27 (l'extrémité de la partie latérale interne du réflecteur 41 se confondant avec celle de la partie latérale externe du réflecteur 42).

Le feu de recul 34 présente ainsi une largeur correspondant à celles additionnées du feu de brouillard 14 et de la zone de style 27 du premier bloc optique 10, ce qui lui permet produire une luminosité suffisante pour assurer au conducteur une vision satisfaisante de l'environnement arrière du véhicule par l'intermédiaire des rétroviseurs ou de la caméra de recul.

La largeur L de la zone de style non illuminée 27 sur le premier bloc optique 10 (correspondant au surplus de largeur du feu de recul 34 du bloc optique 20 par rapport au feu de brouillard 14 du second bloc optique) est avantageusement comprise entre 20 et 70 mm, de sorte que la largeur des feux clignotants de changement de direction 13, 33 soient au moins égale à 30 mm afin de préserver une visibilité fonctionnelle suffisante.

Afin d'améliorer la symétrie visuelle des deux blocs optiques 10, 20, la portion de la glace de couverture 16 du premier bloc optique 10 située en regard du feu de brouillard 14 et de la zone de style 27 présente une couleur cristal identique à celle de la portion symétrique de la glace de couverture 36 du second bloc optique 30 située en regard du feu de recul 34.

Selon des variantes de réalisation non représentées, les boîtiers, les glaces de couvertures, les réflecteurs, les sources lumineuses et/ou les éléments d'ancrage sont conformés différemment.

Selon d'autres variantes de réalisation, chacun des deux blocs optiques arrière intègre également un feu de position surplombant les autres feux.

## Revendications

1. Paire de blocs optiques arrière de signalisation pour véhicule automobile comportant un premier bloc optique (10) et un second bloc optique (30) de mêmes dimensions et destinés à être implantés symétriquement par rapport à l'axe longitudinal dudit véhicule, respectivement du côté conducteur et du côté passager, lesdits blocs optiques (10 ; 30) comprenant chacun un boîtier (11 ; 31) dont la bordure périphérique supporte une glace de couverture (16 ; 36),
le boîtier (11) dudit premier bloc optique (10) renfermant un feu stop (12), un feu de brouillard (14) espacé dudit feu stop (12) d'une distance (D), ainsi qu'un feu clignotant de changement de direction (13) interposé entre ces deux feux (12, 14),
le boîtier (31) dudit second bloc optique (30) renfermant un feu stop (32), un feu de recul (34), ainsi qu'un feu clignotant de changement de direction (33) interposé entre ces deux feux (32, 34) ;
**caractérisé en ce que** les feux clignotant (13) et de brouillard (14) dudit premier bloc optique (10) sont séparés par une zone de style non illuminée (27), et **en ce que** le feu de recul (34) dudit second bloc optique (30) présente une largeur correspondant à celles additionnées dudit feu de brouillard (14) et de ladite zone de style (27) dudit premier bloc optique (10).

2. Paire de blocs optiques arrière de signalisation selon la revendication 1, **caractérisée en ce que** ladite zone de style (27) dudit premier bloc optique présente une largeur comprise entre 20 et 70 mm.

3. Paire de blocs optiques arrière de signalisation selon l'une des revendications 1 ou 2, **caractérisée en ce que** la portion de la glace de couverture (16) dudit premier bloc optique (10) située en regard dudit feu de brouillard (14) et de ladite zone de style (27) présente une couleur identique à celle de la portion symétrique de la glace de couverture (36) dudit second bloc optique (30) située en regard dudit feu de recul (34).

4. Paire de blocs optiques arrière de signalisation selon l'une des revendications 1 à 3, **caractérisée en ce que** les feux stop (12 ; 32) et clignotant (13 ; 33) de chacun desdits blocs optiques (10 ; 30) sont accolés l'un à l'autre.

5. Paire de blocs optiques arrière de signalisation selon l'une des revendications 1 à 4, **caractérisée en ce que** lesdits feux stop (32) et clignotant (33) dudit second bloc optique (30) sont symétriquement identiques auxdits feux stop (12) et clignotant (13) dudit premier bloc optique (10).

6. Paire de blocs optiques arrière de signalisation selon l'une des revendications 1 à 5, **caractérisée en ce que** chacun desdits feux (12, 13, 14 ; 32, 33, 34) desdits blocs optiques (10 ; 30) comporte un réflecteur (20, 21, 22 ; 40, 41, 42) et au moins une source lumineuse (24, 25, 26 ; 44, 45, 46) montée à l'arrière de ce réflecteur.

7. Paire de blocs optiques arrière de signalisation selon la revendication 6, **caractérisée en ce que** la partie latérale interne du réflecteur (21) du feu clignotant (13) dudit premier bloc optique (10) est reliée à la portion latérale externe du réflecteur (22) dudit feu de brouillard (14) par une paroi (28) dont la surface externe non réfléchissante porte des stries ou un grainage.

8. Paire de blocs optiques arrière de signalisation selon l'une des revendications 6 ou 7, **caractérisée en ce que** les réflecteurs (20, 21, 22 ; 40, 41, 42) desdits feux (12, 13, 14 ; 32, 33, 34) de chacun desdits blocs optiques (10 ; 30) sont réalisés d'une seule pièce par moulage à partir d'un matériau thermoplastique, leur face extérieure orientée en direction de ladite glace de couverture correspondante (16 ; 36) étant recouverte d'un revêtement réfléchissant.

9. Paire de blocs optiques arrière de signalisation selon l'une des revendications 1 à 8, **caractérisée en ce que** chacun desdits blocs optiques (10 ; 30) comporte également un feu de position surplombant les autres dits feux (12, 13, 14 ; 32, 33, 34).

10. Véhicule automobile **caractérisé en ce qu'**il comporte une paire de blocs optiques arrière de signalisation selon l'une des revendications 1 à 9.

## Patentansprüche

1. Paar von hinteren Leuchteneinheiten zur Signalisierung für Kraftfahrzeug, das eine erste Leuchteneinheit (10) und eine zweite Leuchteneinheit (30) mit denselben Abmessungen enthält, und die dazu bestimmt sind, symmetrisch bezüglich der Längsachse des Fahrzeugs jeweils auf der Fahrerseite und auf der Beifahrerseite implantiert zu werden, wobei die Leuchteneinheiten (10; 30) jeweils ein Gehäuse (11; 31) umfassen, dessen umlaufender Rand eine Deckscheibe (16; 36) trägt,
wobei das Gehäuse (11) der ersten Leuchteneinheit (10) eine Bremsleuchte (12), einen Nebelscheinwerfer (14), der von der Bremsleuchte (12) um einen Abstand (D) beabstandet ist, sowie ein Blinklicht für Richtungswechsel (13), das zwischen diesen zwei Leuchten (12, 14) eingefügt ist, einschließt,
wobei das Gehäuse (31) der zweiten Leuchteneinheit (30) eine Bremsleuchte (32), eine Rückfahrleuchte (34) sowie ein Blinklicht für Richtungswechsel (33), das zwischen diesen zwei Leuchten (32, 34) eingefügt ist, einschließt;
**dadurch gekennzeichnet, dass** die Blinklichter (13) und Nebelscheinwerfer (14) der ersten Leuchteneinheit (10) durch einen nicht beleuchteten Stilbereich (27) getrennt sind, und dass die Rückfahrleuchte (34) der zweiten Leuchteneinheit (30) eine Breite aufweist, die denjenigen, die um den Nebelscheinwerfer (14) und den Stilbereich (27) der ersten Leuchteneinheit (10) erweitert sind, entspricht.

2. Paar von hinteren Leuchteneinheiten zur Signalisierung nach Anspruch 1, **dadurch gekennzeichnet, dass** der Stilbereich (27) der ersten Leuchteneinheit eine Breite zwischen 20 und 70 mm aufweist.

3. Paar von hinteren Leuchteneinheiten zur Signalisierung nach einem der Ansprüche 1 oder 2, **dadurch gekennzeichnet, dass** der Abschnitt der Deckscheibe (16) der ersten Leuchteneinheit (10) der gegenüber dem Nebelscheinwerfer (14) und dem Stilbereich (27) liegt, eine Farbe aufweist, die mit der des symmetrischen Abschnitts der Deckscheibe (36) der zweiten Leuchteneinheit (30), der gegenüber der Rückfahrleuchte (34) liegt, identisch ist.

4. Paar von hinteren Leuchteneinheiten zur Signalisierung nach einem der Ansprüche 1 bis 3, **dadurch gekennzeichnet, dass** die Bremsleuchten (12; 32) und das Blinklicht (13; 33) jeder der Leuchteneinheiten (10; 30) aneinandergefügt sind.

5. Paar von hinteren Leuchteneinheiten zur Signalisierung nach einem der Ansprüche 1 bis 4, **dadurch gekennzeichnet, dass** die Bremsleuchten (32) und das Blinklicht (33) der zweiten Leuchteneinheit (30) symmetrisch mit den Bremsleuchten (12) und dem Blinklicht (13) der ersten Leuchteneinheit (10) identisch sind.

6. Paar von hinteren Leuchteneinheiten zur Signalisierung nach einem der Ansprüche 1 bis 5, **dadurch gekennzeichnet, dass** jede der Leuchten (12, 13, 14; 32, 33, 34) der Leuchteneinheiten (10; 30) einen Reflektor (20, 21, 22; 40, 41, 42) und mindestens eine Lichtquelle (24, 25, 26; 44, 45, 46), die an der Rückseite dieses Reflektors montiert ist, enthält.

7. Paar von hinteren Leuchteneinheiten zur Signalisierung nach Anspruch 6, **dadurch gekennzeichnet, dass** der interne seitliche Teil des Reflektors (21) des Blinklichts (13) der ersten Leuchteneinheit (10) mit dem externen seitlichen Abschnitt des Reflektors (22) des Nebelscheinwerfers (14) durch eine Wand (28) verbunden ist, deren nicht reflektierende externe Oberfläche Riefen oder eine Körnung aufweist.

8. Paar von hinteren Leuchteneinheiten zur Signalisierung nach einem der Ansprüche 6 oder 7, **dadurch gekennzeichnet, dass** die Reflektoren (20, 21, 22; 40, 41, 42) der Leuchten (12, 13, 14; 32, 33, 34) jeder der Leuchteneinheiten (10; 30) aus einem einzigen Stück durch Formen ausgehend von einem Thermoplastmaterial hergestellt sind, wobei ihre externe Fläche, die in Richtung der entsprechenden Deckscheibe (16; 36) ausgerichtet ist, mit einer reflektierenden Beschichtung bedeckt ist.

9. Paar von hinteren Leuchteneinheiten zur Signalisierung nach einem der Ansprüche 1 bis 8, **dadurch gekennzeichnet, dass** jede der Leuchteneinheiten (10; 30) auch ein Standlicht enthält, das über den anderen Leuchten (12, 13, 14; 32, 33, 34) liegt.

10. Kraftfahrzeug **dadurch gekennzeichnet, dass** es ein Paar von hinteren Leuchteneinheiten zur Signalisierung nach einem der Ansprüche 1 bis 9 enthält.

## Claims

1. Pair of rear signalling optical blocks for a motor vehicle comprising a first optical block (10) and a second optical block (30) with the same dimensions and designed to be positioned symmetrically relative to the longitudinal axis of said vehicle, of the driver side and the passenger side respectively, said optical blocks (10; 30) each comprising a housing (11; 31) the peripheral edge of which supports a covering glass (16; 36),
the housing (11) of said first optical block (10) enclosing a brake light (12), a fog light (14) spaced apart from said brake light (12) by a distance (D), as well as an indicator light (13) interposed between said two lights (12, 14),
the housing (31) of said second optical block (30) enclosing a brake light (32), a reversing light (34), as well as an indicator light (33) interposed between said two lights (32, 34);
**characterised in that** the indicator light (13) and fog light (14) of said first optical block (10) are separated by a non-illuminated style area (27), and **in that** the reversing light (34) of said second optical block (30) has a width corresponding to the combination of said fog light (14) and said style area (27) of the first optical block (10).

2. Pair of rear signalling optical blocks according to claim 1, **characterised in that** said style area (27) of said first optical block has a width between 20 and 70 mm.

3. Pair of rear signalling optical blocks according to any of claims 1 or 2, **characterised in that** the portion of covering glass (16) of said first optical block (10) facing said fog light (14) and said style area (27) has an identical colour to that of the symmetrical portion of the covering glass (36) of said second optical block (30) facing said reversing light (34).

4. Pair of rear signalling optical blocks according to any of claims 1 to 3, **characterised in that** the stop light (12; 32) and indicator light (13; 33) of each of said optical blocks (10; 30) are contiguous to one another.

5. Pair of rear signalling optical blocks according to any of claims 1 to 4, **characterised in that** said stop light (32) and indicator light (33) of said second optical block (30) are symmetrically identical to said stop light (12) and indicator light (13) of the first optical block (10).

6. Pair of rear signalling optical blocks according to any of claims 1 to 5, **characterised in that** each of said lights (12, 13, 14; 32, 33, 34) of said optical blocks (10; 30) comprises a reflector (20, 21, 22; 40, 41, 42) and at least one light source (24, 25, 26; 44, 45, 46) mounted to the rear of said reflector.

7. Pair of rear signalling optical blocks according to claim 6, **characterised in that** the lateral internal part of the reflector (21) of the indicator light (13) of said first optical block (10) is connected to the lateral external portion of the reflector (22) of said fog light (14) by a wall (28), the non-reflective external surface bears striations or is textured.

8. Pair of rear signalling optical blocks according to any of claims 6 or 7, **characterised in that** the reflectors (20, 21, 22; 40, 41, 42) of said lights (12, 13, 14; 32, 33, 34) of each of said optical blocks (10; 30) are formed in one piece by moulding from a thermoplastic material, their external face being oriented in the direction of said corresponding covering glass (16; 36) covered by a reflective coating.

9. Pair of rear signalling optical blocks according to any of claims 1 to 8, **characterised in that** each of said optical blocks (10; 30) also comprises a parking light projecting over the other lights (12, 13, 14; 32, 33, 34).

10. Motor vehicle **characterised in that** it comprises a pair of rear signalling optical blocks according to any of claims 1 to 9.
